(19) Europäisches Patentamt / European Patent Office / Office européen des brevets

(11) **EP 1 474 359 B1**

(12) **FASCICULE DE BREVET EUROPEEN**

(45) Date de publication et mention
de la délivrance du brevet:
**04.11.2009 Bulletin 2009/45**

(51) Int Cl.:
*C01B 25/38* (2006.01)  *C01B 25/45* (2006.01)
*C01B 25/26* (2006.01)

(21) Numéro de dépôt: **03739522.5**

(22) Date de dépôt: **11.02.2003**

(86) Numéro de dépôt international:
**PCT/FR2003/000426**

(87) Numéro de publication internationale:
**WO 2003/068675 (21.08.2003 Gazette 2003/34)**

(54) **PROCEDE DE PREPARATION D'UN PRODUIT A BASE DE PHOSPHATE DE THORIUM ET/OU D'ACTINIDE(S)**

VERFAHREN ZUR HERSTELLUNG EINES PRODUKTS AUF BASIS VON PHOSPHATEN VON THORIUM UND/ODER AKTINID(EN)

METHOD OF PREPARING A PRODUCT BASED ON PHOSPHATE OF THORIUM AND/OR ACTINIDE (S)

(84) Etats contractants désignés:
**DE FR GB**

(30) Priorité: **13.02.2002 FR 0201760**

(43) Date de publication de la demande:
**10.11.2004 Bulletin 2004/46**

(73) Titulaire: **CENTRE NATIONAL DE LA RECHERCHE SCIENTIFIQUE**
**75794 Paris Cedex 16 (FR)**

(72) Inventeurs:
• **BRANDEL, Vladimir**
**F-94000 CRETEIL (FR)**
• **DACHEUX, Nicolas**
**F-91190 GIF SUR YVETTE (FR)**
• **GENET, Michel**
**F-91120 PALAISEAU (FR)**

(74) Mandataire: **Breese, Pierre et al**
**NOVAGRAAF IP**
**122, rue Edouard Vaillant**
**92593 Levallois-Perret Cedex (FR)**

(56) Documents cités:
• **DACHEUX N ET AL: "Investigations of systems ThO/sub 2/-MO/sub 2/-P/sub 2/O/sub 5/ (M=U,Ce, Zr,Pu). Solid solutions of thorium-uranium (IV) and thorium-plutonium (IV) phosphate-diphosphates" JOURNAL OF NUCLEAR MATERIALS, FEB. 1998, ELSEVIER, NETHERLANDS, vol. 252, no. 3, pages 179-186, XP002215879 ISSN: 0022-3115**
• **DACHIEUX N ET AL: "SOLID SOLUTIONS OF URANIUM AND THORIUM PHOSPHATES: SYNTHESIS, CHARACTERIZATION AND X-RAY PHOTOELECTRON SPECTROSCOPY" NEW JOURNAL OF CHEMISTRY, CNRS-GAUTHIER-VILLARS, MONTROUGE, FR, vol. 20, no. 3, 1 mars 1996 (1996-03-01), pages 301-310, XP000575193 ISSN: 1144-0546**
• **DACHEUX N ET AL: "Actinides immobilization in new matrices based on solid solutions: Th4-xMx (PO4)4P2O7, (M=U,Pu)" JOURNAL OF ALLOYS AND COMPOUNDS, ELSEVIER SEQUOIA, LAUSANNE, CH, vol. 271-273, 12 juin 1998 (1998-06-12), pages 236-239, XP004181778 ISSN: 0925-8388**
• **DACHEUX N ET AL: "Investigation of the system ThO/sub 2/-NpO/sub 2/-P/sub 2/O/sub 5/. Solid solutions of thorium-neptunium (IV) phosphate-diphosphate" JOURNAL OF NUCLEAR MATERIALS, NOV. 1998, ELSEVIER, NETHERLANDS, vol. 257, no. 2, pages 108-117, XP002215880 ISSN: 0022-3115**

**(Cont. page suivante)**

• THOMAS A C ET AL: "Kinetic and thermodynamic studies of the dissolution of thorium-uranium(IV) phosphate-diphosphate solid solutions" JOURNAL OF NUCLEAR MATERIALS, JUNE 2001, ELSEVIER, NETHERLANDS, vol. 295, no. 2-3, pages 249-264, XP002215881 ISSN: 0022-3115

**Description**

**Domaine technique**

La présente invention a pour objet l'obtention de produits à base de phosphate de thorium et/ou d'actinides, utilisables pour le conditionnement et le traitement de déchets radioactifs tels que des effluents liquides.

De façon plus précise, elle se rapporte à la préparation de produits précurseurs du phosphate-diphosphate de thorium de formule $Th_4(PO_4)_4P_2O_7$ (PDT) ou de formule $Th_{4-X}M_X(PO_4)_4P_2O_7$ dans laquelle M est un actinide tétravalent tel que Pa, U, Np et Pu.

**Etat de la technique antérieure**

Dans le document WO 96/30300 [1], on a décrit plusieurs procédés de synthèse et de caractérisation du phosphate de thorium $Th_4(PO_4)_4P_2O_7$ en tant que matrice de conditionnement pour le stockage des déchets nucléaires.

Les synthèses portent sur divers milieux. Pour les synthèses qui ont lieu en milieu liquide, elles font état d'un mélange de solutions aqueuses de produits chimiques (sels de thorium, composés contenant des déchets nucléaires, acides, bases) qui conduit toujours à des solutions concentrées.

C'est à partir de ces solutions concentrées que l'on obtient principalement par évaporation des matières volatiles (eau et acides, par exemple), un résidu sec et amorphe, lequel aboutira par calcination à 850-1300°c au phosphate-diphosphate de thorium $Th_4(PO_4)_4P_2O_7$ parfaitement cristallisé qui possède alors les propriétés requises pour une bonne rétention des déchets nucléaires qui y sont incorporés.

Dans ce procédé, le stade qui consiste à réaliser l'évaporation de solutions concentrées est tout à fait réalisable mais dans des conditions extrêmes. En effet, il s'agit d'évaporer des solutions très agressives chimiquement (acides ou basiques) contenant des taux de radioactivité très élevés. Cette voie est donc techniquement possible mais délicate.

**Exposé de l'invention**

La présente invention a précisément pour objet un procédé de préparation d'un produit à base de phosphate de thorium et/ou d'actinide(s) qui peut être aisément converti en phosphate-diphosphate de thorium, sans nécessiter d'étape d'évaporation de solutions agressives.

Selon l'invention, le procédé de préparation d'un produit contenant un phosphate d'au moins un élément M (IV) choisi parmi le thorium (IV) et les actinides (IV), se **caractérise en ce qu'**il comprend les étapes suivantes :

a) mélanger une solution contenant du thorium (IV) et/ou au moins un actinide (IV) avec une solution d'acide phosphorique en quantités telles que le rapport molaire

$$\frac{PO_4}{M(IV)}$$

où M(IV) représente la concentration totale en thorium (IV) et/ou actinide(s) (IV), soit de 1,4 à 2, de préférence de 1,5 à 1,8,

b) chauffer le mélange des solutions dans un récipient fermé à une température de 50 à 250°C pour précipiter un produit contenant un phosphate d'au moins un élément M choisi parmi le thorium (IV) et les actinides (IV) ayant un rapport molaire P/M égal à 1,5, et

c) séparer le produit précipité de la solution.

Ainsi, selon ce procédé, on part de solutions exclusivement acides, ayant une composition chimique sensiblement identique à celle décrite auparavant, et l'on obtient par chimie douce un précurseur cristallisé, c'est-à-dire par un chauffage modéré du mélange en récipient clos pour éviter cette fois-ci l'évaporation et favoriser la précipitation de ce précurseur. Ce dernier sera ensuite facilement séparé par décantation, filtration ou centrifugation, à température ambiante, de la solution qui lui a donné naissance. Ce procédé évite ainsi l'étape d'évaporation et le traitement des effluents gazeux inhérents au procédé décrit dans WO 96/30300 [1].

Ceci est particulièrement intéressant lorsque l'on utilise le procédé pour le traitement d'effluents liquides, car on évite ainsi d'avoir à évaporer des solutions acides radioactives et de traiter les effluents gazeux résultant de l'évaporation.

Selon l'invention, on réalise le chauffage en enceinte fermée à une température modérée (50 à 250°C), pendant une durée variable qui dépend de la température utilisée et de la nature de M(IV). Cette durée peut aller par exemple de 1 heure à 1 mois, pour obtenir un solide finement cristallisé qui peut être facilement séparé de la solution, après refroidissement de celle-ci.

La durée de chauffage est un paramètre important car elle a une influence directe sur la qualité du précité formé.

Pour ce chauffage, le mélange des solutions de M(IV) et d'acide phosphorique est introduit par exemple dans un récipient en téflon avec bouchon à vis, très étanche.

Le chauffage du récipient peut être effectué par tout moyen, par exemple dans un four à résistance électrique, dans un four à micro-ondes, dans un bain de sable, dans un bain d'huile, ou encore en utilisant une lampe infra-rouge ou un courant de gaz chaud.

Selon une caractéristique avantageuse, le procédé de l'invention comprend de plus les étapes suivantes :

d) laver avec de l'eau le produit précipité ainsi séparé, et

e) sécher le produit lavé, par exemple en étuve.

Les solutions contenant du thorium et/ou un ou des actinides utilisables dans ce procédé peuvent être préparées par exemple à partir des sels tels que des chlorures, des bromures, des nitrates, des sulfates et des oxalates.

On peut aussi les préparer par toute méthode permettant d'introduire des ions actinides (IV) en solution, par exemple par dissolution du métal ou de l'oxyde.

Le procédé décrit ci-dessus peut être utilisé pour préparer du phosphate-diphosphate de thorium de formule $Th_4(PO_4)_4P_2O_7$ en utilisant dans l'étape a) une solution contenant du thorium et de l'acide phosphorique, et en soumettant le produit à base de phosphate de thorium (IV) séparé par précipitation, à un traitement thermique effectué au moins en partie à une température de 700 à 1300°C.

On peut aussi utiliser le procédé de l'invention pour préparer une solution solide de phosphates de thorium et d'au moins un actinide tétravalent, en utilisant dans l'étape a) une solution contenant du thorium et au moins un actinide tétravalent, et de l'acide phosphorique, et en soumettant le produit à base de phosphates de thorium (IV) et d'actinide (s) (IV) obtenu à un traitement thermique effectué au moins en partie à une température de 700 à 1300°C.

Par exemple, le traitement thermique est effectué en deux étapes, une première étape de précalcination réalisée à une température de 300 à 500°C, pendant 1 à 5 h, et une seconde étape de calcination réalisée à une température de 1100 à 1300°C, pendant 3 à 15 h.

On peut aussi effectuer une compression à froid de la poudre avant d'effectuer le traitement thermique, pour obtenir un produit fritté.

Ainsi, le procédé de l'invention permet d'obtenir un produit fritté dans de meilleures conditions (température, durée, pression) que dans le cas du document [1], en raison des meilleures propriétés physico-chimiques (granulométrie, surface spécifique) du produit précipité.

On peut ainsi préparer des solutions solides de phosphates répondant à la formule :

$$Th_{4-x}M_x(PO_4)_4P_2O_7$$

dans laquelle M est un élément choisi parmi Pa (IV), U (IV), Np (IV) et Pu (IV), et x satisfait aux conditions suivantes :

$$x \leq 3,75$$

pour Pa (IV)

$$x \leq 3$$

pour U (IV)

$$x \leq 2,14$$

pour Np (IV)

$$x \leq 1,67$$

pour Pu (IV).

Pour la mise en oeuvre du procédé de l'invention, on peut utiliser par exemple comme solution de thorium, une solution de ThCl$_4$ dans de l'acide chlorhydrique, ou une solution de nitrate de thorium dans l'acide nitrique. La solution de ThCl$_4$ peut être obtenue par dissolution de ThCl$_4$ solide dans une solution d'acide chlorhydrique 0,5 à 2 M, afin d'obtenir une solution de ThCl$_4$ 0,5 à 2 M. La solution de thorium en milieu nitrique peut être obtenue par dissolution de Th(NO$_3$)$_4$, 5H$_2$O dans une solution 0,5 à 5 M de HNO$_3$, afin d'obtenir une solution de Th 0,5 à 2 M.

Lorsque l'actinide est l'uranium (IV), la solution d'uranium (IV) peut être une solution de UCl$_4$ dans de l'acide chlorhydrique, obtenue par exemple par dissolution de UCl$_4$ dans HCl 0,5 à 6 M, ou par dissolution d'uranium métal dans HCl 6 M amenée ensuite à la concentration voulue, par exemple 0,5 à 1,5 M de U, par dilution avec de l'eau désionisée.

Lorsque l'actinide est le neptunium (IV), la solution de neptunium (IV) peut être une solution de neptunium dans l'acide nitrique, obtenue par exemple par dissolution de NpO$_2$ solide dans HNO$_3$ 4 à 5 M et dilution avec de l'eau désionisée pour avoir une concentration en acide nitrique de 1 à 4 M et une concentration en Np de 0,1 à 0,3 M.

Lorsque l'actinide est le plutonium (IV), la solution de plutonium peut être une solution de plutonium dans l'acide nitrique, obtenue par exemple par dissolution de PuO$_2$ dans une solution d'acide nitrique HNO$_3$ 4 à 5 M et dilution avec de l'eau désionisée pour obtenir une concentration en acide nitrique de 1 à 4 M et une concentration en Pu de 0,2 à 0,6 M.

Ainsi, le procédé de l'invention permet de préparer du phosphate-diphosphate de thorium lorsqu'il est mis en oeuvre avec une solution de thorium à laquelle on ajoute une solution d'acide phosphorique dans le rapport molaire voulu. On forme ainsi un gel qui, dans le récipient fermé, se transforme ensuite par chauffage en un précipité formé d'une poudre cristallisée. Cette poudre peut être ensuite transformée en phosphate-diphosphate de thorium (PDT) par traitement thermique.

Le procédé de l'invention peut être aussi utilisé pour préparer un phosphate d'actinide, par exemple d'uranium (IV), en formant tout d'abord un précipité de phosphate d'uranium que l'on transforme ensuite par traitement thermique en un phosphate de structure différente de celle du phosphate-diphosphate de thorium, correspondant à un système polyphasé.

Pour cette préparation, on utilise dans l'étape a) une solution contenant de l'uranium et de l'acide phosphorique, et on soumet le produit précipité à un traitement thermique effectué au moins en partie à une température de 700 à 1300°C.

Dans ce cas, la solution acide d'uranium ne doit pas comporter d'oxydant car en présence d'un oxydant comme l'acide nitrique par exemple, l'uranium tétravalent est oxydé en uranium hexavalent sous forme d'ion uranyle UO$_2^{2+}$ qui ne formera pas de précipité dans les conditions du procédé de l'invention.

Le procédé peut aussi être utilisé pour former des solutions solides d'actinides tétravalents en partant d'un mélange de solutions acides contenant plusieurs actinides (IV), et d'acide phosphorique, que l'on soumet ensuite à un chauffage en récipient fermé à une température de 50 à 250°C pour précipiter un produit contenant des phosphates d'actinides.

Lorsqu'on part d'une solution de thorium et d'actinide(s), on obtient par précipitation suivie d'un chauffage dans l'enceinte fermée, une poudre très homogène constituée de grains de taille inférieure à 3 $\mu$m, qui peut être transformée par traitement thermique en un phosphate-diphosphate de thorium et d'uranium (IV).

On peut aussi inclure dans ce phosphate-diphosphate de thorium et/ou d'actinide(s) tétravalent des éléments trivalents ou d'autres éléments tétravalents en réalisant une coprécipitation des éléments trivalents avec les éléments tétravalents, lors du chauffage en enceinte fermée. On obtient en fin d'opération un système biphasé ou polyphasé constitué de phosphate-diphosphate de thorium et/ou d'actinide(s) tétravalent, et d'un phosphate contenant les éléments lanthanides trivalents tels que le gadolinium et le lanthane, et/ou d'actinides trivalents tels que l'américium et le curium.

On peut aussi préparer à partir du produit à base de phosphate de thorium (IV) et/ou d'actinide(s) (IV) obtenu par précipitation à la suite des étapes a) à c), un matériau composite incluant au moins un actinide (III) et/ou au moins un lanthanide (III) sous forme de phosphate tel que la monazite M$^{III}$PO$_4$, la xénotime M$^{III}$PO$_4$ et la brabantite M$^{II}_X$M'$^{IV}_X$M"$^{III}_{(2-2x)}$(PO$_4$)$_2$.

Ce matériau peut être préparé en dispersant une poudre du (des) phosphate(s) préalablement formé(s) dans le précipité du produit contenant un phosphate de thorium (IV) et/ou d'actinide(s) (IV), et en soumettant ensuite l'ensemble à un traitement thermique précédé éventuellement d'une compression, effectué au moins en partie à une température de 700 à 1300°C.

L'invention a encore pour objet un procédé de séparation de l'uranium (VI), sous forme d'ion uranyle UO$_2^{2+}$, présent dans une solution avec d'autres cations y compris du thorium, selon lequel on ajoute à la solution de l'acide phosphorique en quantité telle que le rapport molaire acide phosphorique/autres cations soit de 1,4 à 2, on chauffe la solution ainsi obtenue à une température de 50 à 250°C dans un récipient fermé pour précipiter un produit contenant les autres cations que l'uranium, et on récupère la solution contenant l'uranium (VI).

En effet, le phosphate d'uranyle (UO$_2$)$_3$(PO$_4$)$_2$, 5H$_2$O plus soluble que les phosphates de cations trivalents et tétravalents, comme par exemple les actinides et les lanthanides, peut ne pas précipiter dans certaines conditions opératoires. I1 est donc possible de séparer l'uranium des autres cations en jouant sur les concentrations des espèces en solution et sur l'acidité du milieu, de façon à former un précipité contenant les autres cations et à laisser l'uranium en solution.

L'invention a encore pour objet un procédé de décontamination d'effluents aqueux radioactifs consistant à précipiter un produit à base de phosphate de thorium dans l'effluent par addition de thorium puis d'acide phosphorique à l'effluent en quantités telles que le rapport molaire P/Th soit de 1,4 à 2, et chauffage dans un récipient fermé à une température de 50 à 250°C, pour précipiter un produit contenant du phosphate de thorium dans l'effluent entraînant ainsi les cations radioactifs contaminants.

D'autres caractéristiques et avantages de l'invention apparaîtront mieux à la lecture de la description qui suit d'exemples donnés bien entendu à titre illustratif et non limitatif, en référence aux dessins annexés.

**Brève description des dessins**

- la figure 1 est un diagramme de diffraction des rayons X du précurseur de phosphate-diphosphate de thorium obtenu dans l'exemple 1 ;
- la figure 2 est le spectre infrarouge de ce même précurseur ;
- la figure 3 est un diagramme de diffraction des rayons X du phosphate d'uranium (IV) obtenu dans l'exemple 2 ;
- la figure 4 est le spectre infrarouge de ce phosphate d'uranium (IV).

**Exposé détaillé des modes de réalisation**

Exemple 1 : préparation du phosphate-diphosphate de thorium (PDT)

a) Préparation du précurseur

Dans un récipient en téflon, on prépare une solution de thorium en dissolvant 4 g de $ThCl_4$ solide dans une solution d'acide chlorhydrique 2 M pour obtenir une concentration en thorium de 0,7 M. On ajoute à cette solution progressivement, sous agitation, une solution d'acide phosphorique $H_3PO_4$ 5M obtenue par dilution de l'acide concentré 14 M environ avec de l'eau désionisée, pour obtenir un rapport molaire acide phosphorique/thorium égal à 3/2 avec un excès d'acide phosphorique de 2%. On arrête alors l'agitation, on ferme le récipient et on le chauffe à une température de 150°C, sur un banc de sable, pendant 21 jours. Le gel initialement formé se transforme dans ces conditions en précipité. La réaction qui se produit conduit à l'obtention d'un phosphate de thorium cristallisé.

On refroidit le récipient et on laisse le précipité décanter jusqu'à l'obtention d'un surnageant limpide.

On élimine le surnageant au moyen d'une pipette et on le remplace par de l'eau désionisée. On met le tout en suspension par agitation puis on laisse le précipité décanter et on répète l'opération jusqu'à l'obtention d'un surnageant de pH voisin de celui de l'eau désionisée. On filtre alors le précipité sur un verre fritté sous vide puis on le sèche à 120°C.

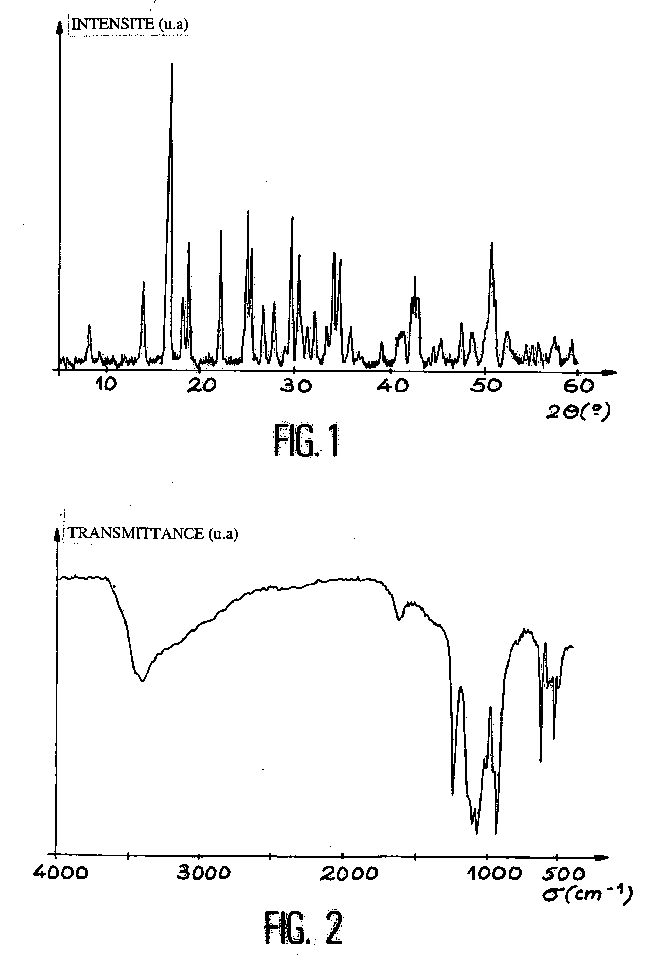

La figure 1 représente le diagramme de diffraction de rayons X du produit séché.

La figure 2 représente le spectre infrarouge de ce même produit.

Si l'on compare le diagramme de la figure 1 au diagramme du phosphate-diphosphate de thorium (PDT) illustré en figure 1 de WO 96/30300 [1], on remarque que ce produit est différent du phosphate-diphosphate de thorium ; il s'agit d'un précurseur du PDT.

b) préparation du PDT

On peut transformer le précurseur obtenu précédemment en phosphate-diphosphate de thorium en le soumettant tout d'abord à une précalcination à 400°C pendant 2 h puis à une calcination à une température de 1150°C, pendant 10 h.

Les caractéristiques du produit calciné correspondent bien à celles du phosphate-diphosphate de thorium du document [1].

Exemple 2 préparation d'un produit précurseur de phosphate d'uranium (IV)

a) préparation du précurseur

On suit le même mode opératoire que dans l'exemple 1. Ainsi, on prépare tout d'abord une solution d'uranium (IV) par dissolution de 4 g de $UCl_4$ dans une solution d'acide chlorhydrique HCl 4 M pour obtenir une concentration en uranium de 0,7 M. On mélange cette solution avec une solution 5 M d'acide phosphorique dans le rapport molaire acide phosphorique/uranium (IV) égale à 3/2 avec un excès de 2% d'acide phosphorique. Le mélange est effectué dans un récipient que l'on ferme ensuite et que l'on chauffe, comme dans l'exemple 1, à une température de 150°C, sur banc de sable, pendant 1 semaine. Dans ces conditions, le gel initial est transformé par chauffage en poudre cristallisée.

On sépare la poudre et on la lave, puis on la sèche comme dans l'exemple 1.

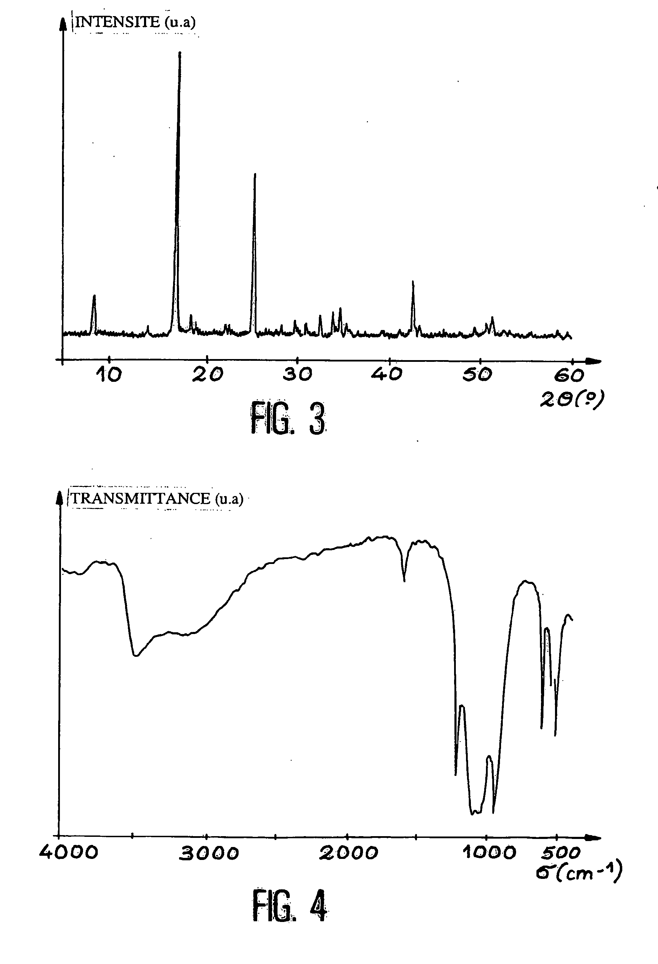

La figure 3 représente le diagramme de diffraction de rayons X du produit obtenu.

La figure 4 représente le spectre infrarouge de ce produit.

b) préparation du phosphate d'uranium

On soumet le produit obtenu précédemment à une précalcination et à une calcination comme dans l'exemple 1, et on obtient ainsi un système polyphasé de phosphate d'uranium.

On peut préparer de la même façon des produits à base de phosphate de protactinium (IV), de phosphate de neptunium (IV) ou de phosphate de plutonium (IV), en utilisant le même rapport molaire acide phosphorique/actinide (IV) et en préparant le mélange à partir d'une solution acide de protactinium (IV), de neptunium (IV) ou de plutonium (IV).

Exemple 3 : préparation d'une solution solide de phosphate-diphosphate de thorium et d'actinide (IV)

Dans ce cas, on prépare une solution de thorium et d'actinide (IV) dans des proportions permettant d'obtenir un phosphate-diphosphate de formule $Th_{4-x}M_x(PO_4)_4P_2O_7$ dans laquelle M représente l'actinide (IV), avec x présentant les valeurs suivantes :

$$x \leq 3,75$$

pour Pa(IV)

$$x \leq 3$$

pour U(IV)

$$x \leq 2,14$$

pour Np(IV)

$$x \leq 1,67$$

pour Pu(IV)

On mélange la solution de thorium obtenue dans l'exemple 1 avec une solution d'actinide et on mélange avec une solution d'acide phosphorique 5 M comme dans les exemples précédents. Les quantités de thorium, d'actinide M et d'acide phosphorique sont telles que le rapport molaire acide phosphorique/Th+M soit de 3/2 avec un excès d'acide phosphorique de 2%. On soumet ensuite ce mélange à un chauffage dans un récipient fermé à une température de 150°C, sur banc de sable, pendant 1 semaine.

Le gel initialement formé se transforme en poudre. On sépare la poudre, on la lave et on la sèche comme dans l'exemple 1. La poudre séchée est très homogène, constituée de grains de taille inférieure à 3 $\mu$m. La surface spécifique correspondante avoisine 10 m$^2$/g, ce qui lui confère une plus forte réactivité.

Cette forte réactivité de la poudre la rend très intéressante pour le conditionnement des actinides radioactifs introduits dans le phosphate-diphosphate de thorium.

En effet, on obtient une poudre ayant de meilleures propriétés physicochimiques que celles de la poudre obtenue dans le document [1].

On soumet ensuite la poudre à un traitement thermique à une température de 1250°C pendant 10 h pour former la solution solide de phosphate-diphosphate de thorium et d'actinide (IV) de formule $Th_{4-x}M_x(PO_4)_4P_2O_7$.

La surface spécifique de la poudre diminue de manière importante pour des températures de traitement thermique supérieures ou égales à 800°C. Corrélativement, la taille des grains augmente jusqu'à atteindre 10 à 20 $\mu$m à

1250°C.

Si, préalablement au traitement thermique, on effectue une compression de la poudre à 500 MPa, la densité du produit atteint 95% de celle calculée, après seulement 5 heures de traitement thermique, ce qui correspond à 5% environ de porosité totale, à peu près à part égale entre porosité ouverte et porosité fermée.

De plus, la surface spécifique des pastilles est comprise entre 750 et 1500 cm²/g, ce qui permet de réduire d'un facteur proche de 6, la vitesse de dissolution du solide par rapport à celle de la poudre, lors des tests de lixiviation. Outre l'influence de la surface spécifique sur la vitesse de lixiviation, les études entreprises confirment les très bonnes propriétés physicochimiques de confinement de la solution solide de phosphate-diphosphate de thorium et d'actinide tétravalent tel que l'uranium (IV).

Exemple 4 préparation d'un fritté composite à base de phosphate-diphosphate de thorium et d'uranium (IV) et de phosphate de gadolinium

On mélange des solutions de thorium (0,7 M) et d'uranium (IV) (0,6 M) en milieu chlorhydrique, comme cela est décrit dans les exemples précédents de manière à respecter un rapport molaire Th/U égal à 1,5 puis on ajoute une solution d'acide phosphorique 5 M dans le rapport molaire $PO_4$/(Th+U)=1,5. On place ce mélange, dans un récipient clos, et on le chauffe, sur banc de sable, à 150°C pendant 2 jours. Le précipité cristallisé de phosphate de thorium et d'uranium (IV) ainsi obtenu, est filtré, lavé puis séché comme cela est décrit dans l'exemple 3.

Préalablement, une poudre de phosphate de gadolinium est préparée par précipitation (ou évaporation à sec) chauffée à 150°C, filtrée, séchée, broyée, puis traitée à 1250°C pendant 10 heures. La poudre de $GdPO_4$ cristallise alors dans la structure monazite. Elle est homogène, monophasée et caractérisée par une surface spécifique de 1 à 3 m²/g et une taille moyenne de grains inférieure à 2 $\mu$m, ce qui lui confère une forte réactivité.

Cette poudre est dispersée dans le phosphate de thorium et d'uranium (IV) dans le rapport massique : phosphate de thorium et d'uranium (IV) : 70% -phosphate de gadolinium : 30%. Le mélange est broyé, pressé à 500 MPa puis traité à 1250°C pendant 10 heures sous atmosphère inerte (par exemple, sous atmosphère d'argon). Après traitement thermique à 1250°C, on obtient ainsi un fritté dense de solution solide de phosphate-diphosphate de thorium et d'uranium (IV) de formule $Th_{2,4}U_{1,6}(PO_4)_4P_2O_7$ contenant, en dispersion, du phosphate de gadolinium $GdPO_4$ de structure de type monazite.

Le gadolinium (utilisé comme poison neutronique) peut être partiellement substitué par de l'américium et/ou du curium alors que l'uranium (IV) peut être substitué par du neptunium (IV) et/ou du plutonium (IV), ce qui permet alors de préparer des échantillons composites contenant, à la fois, des actinides trivalents et tétravalents.

Exemple 5 : séparation de l'uranium (VI) des ions divalents, trivalents et tétravalents en solution

On part d'une solution comprenant du nitrate de thorium 0,1 M, du nitrate d'uranyle 0,1 M, dans l'acide nitrique 2 M, et on y ajoute une solution d'acide phosphorique $H_3PO_4$ 5 M pour avoir un rapport stoechiométrique acide phosphorique/thorium de 1,5 avec 2% d'excès d'acide phosphorique. On forme ainsi un gel qui renferme les ions, puis on chauffe le gel dans un récipient fermé à une température de 150°C, jusqu'à l'obtention d'un précipité qui comporte le précurseur du phosphate-diphosphate de thorium alors que l'ion uranyle reste dans le surnageant.

On peut ainsi récupérer l'uranium (VI) par décantation, filtration et lavage.

Si la solution comporte d'autres cations divalents tels que $Ca^{2+}$, $Ba^{2+}$ et $Sr^{2+}$, et d'autres cations trivalents tels que $La^{3+}$, $Gd^{3+}$ et $Ce^{3+}$, ceux-ci sont entraînés avec le phosphate de thorium sous forme de précipité alors que l'uranium (VI) reste en solution.

Il en est de même si la solution comprend d'autres actinides tétravalents qui seront entraînés dans la phase solide avec le thorium.

On peut suivre le même mode opératoire pour décontaminer des effluents liquides radioactifs.

**Référence citée**

[1] WO 96/30300

**Revendications**

1. Procédé de préparation d'un produit contenant un phosphate d'au moins un élément M (IV) choisi parmi le thorium (IV) et les actinides (IV), **caractérisé en ce qu'**il comprend les étapes suivantes :

   a) mélanger une solution contenant du thorium (IV) et/ou au moins un actinide (IV) avec une solution d'acide phosphorique en quantités telles que le rapport molaire

$$\frac{PO_4}{M(IV)}$$

où M(IV) représente la concentration totale en thorium (IV) et/ou actinide(s) (IV), soit de 1,4 à 2,

b) chauffer le mélange des solutions dans un récipient fermé à une température de 50 à 250°C pour précipiter un produit contenant un phosphate d'au moins un élément M choisi parmi le thorium (IV) et les actinides (IV) ayant un rapport molaire P/M égal à 1,5,

c) séparer le produit précipité de la solution.

2. Procédé selon la revendication 1, qui comprend de plus les étapes suivantes :

d) laver avec de l'eau le produit précipité ainsi séparé, et

e) sécher le produit lavé.

3. Procédé selon la revendication 1 ou 2, le produit préparé étant du phosphate-diphosphate de thorium de formule $Th_4(PO_4)_4P_2O_7$,

dans lequel dans l'étape (a) on mélange une solution contenant du thorium et de l'acide phosphorique, et dans lequel on soumet le produit obtenu à l'étape (c) ou (e) à un traitement thermique effectué au moins en partie à une température de 700 à 1300°C.

4. Procédé selon la revendication 1 ou 2, le produit préparé étant du phosphate d'uranium,

dans lequel dans l'étape (a) on mélange une solution contenant de l'uranium et de l'acide phosphorique, et dans lequel on soumet le produit obtenu à l'étape (c) ou (e) à un traitement thermique effectué au moins en partie à une température de 700 à 1300°C de façon à obtenir du phosphate d'uranium.

5. Procédé selon la revendication 1 ou 2, le produit préparé étant une solution solide de phosphate de thorium et d'au moins un actinide tétravalent,

dans lequel dans l'étape (a) on mélange une solution contenant du thorium et au moins un actinide, et de l'acide phosphorique, et dans lequel on soumet le produit obtenu à l'étape (c) ou (e) à un traitement thermique effectué au moins en partie à une température de 700 à 1300°C.

6. Procédé selon la revendication 5, dans lequel la solution solide de phosphates répond à la formule :

$$Th_{4-x}M_x(PO_4)_4P_2O_7$$

dans laquelle M est un élément choisi parmi Pa(IV), U (IV), Np (IV) et Pu (IV), et x satisfait aux conditions suivantes :

$$x \leq 3,75$$

pour Pa(IV)

$$x \leq 3$$

pour U (IV)

$$x \leq 2,14$$

pour Np (IV)

$$x \leq 1,67$$

pour Pu (IV).

7. Procédé selon l'une quelconque des revendications 1, 3, 5 et 6, dans lequel la solution de thorium est une solution de $ThCl_4$ dans de l'acide chlorhydrique.

8. Procédé selon l'une quelconque des revendications 1, 2 et 4 à 6, dans lequel l'actinide est l'uranium (IV) et la solution d'uranium (IV) est une solution de $UCl_4$ dans de l'acide chlorhydrique.

9. Procédé selon l'une quelconque des revendications 1, 2, 5 et 6, dans lequel l'actinide est le neptunium (IV) et la solution de neptunium (IV) est une solution de neptunium dans l'acide nitrique.

10. Procédé selon l'une quelconque des revendications 1, 2, 5 et 6, dans lequel l'actinide est le plutonium (IV) et la solution de plutonium (IV) est une solution de plutonium dans l'acide nitrique.

11. Procédé selon l'une quelconque des revendications 3 à 5,
dans lequel le traitement thermique est réalisé en deux étapes qui sont respectivement :

- une première étape effectuée à une température de 300 à 500°C pendant 1h à 5h, et
- une seconde étape effectuée à une température de 1100 à 1300°C pendant 3 à 15h.

12. Procédé selon l'une quelconque des revendications 1 à 11, dans lequel dans l'étape (a), on ajoute de plus au mélange au moins un élément choisi parmi les actinides trivalents et les lanthanides trivalents pour inclure le(s) actinide(s) trivalent(s) et/ou le(s) lanthanide(s) trivalent(s) dans le produit précipité dans l'étape (b).

13. Procédé selon la revendication 1, dans lequel le produit préparé étant un matériau composite incluant au moins un actinide (III) et/ou au moins un lanthanide (III),
dans lequel dans l'étape (a) on mélange une solution contenant du thorium et/ou au moins un actinide, et de l'acide phosphorique,
dans lequel on disperse dans le produit obtenu à l'étape (c) ou (e) une poudre d'au moins un actinide (III) et/ou d'au moins un lanthanide (III) sous forme de phosphate, et on soumet l'ensemble à un traitement thermique, précédé éventuellement d'une compression, effectué au moins en partie à une température de 700 à 1300°C.

14. Procédé de séparation de l'uranium (VI), sous forme d'ion uranyle $UO_2^{2+}$, présent dans une solution avec d'autres cations y compris du thorium, **caractérisé en ce que** l'on ajoute à la solution de l'acide phosphorique en quantité telle que le rapport molaire

$$\frac{\text{acide phosphorique}}{M(IV)}$$

soit de 1,4 à 2, **en ce que** l'on chauffe la solution ainsi obtenue à une température de 50 à 250°C dans un récipient fermé pour précipiter un produit contenant les autres cations y compris du thorium, que l'uranium, et **en ce que** l'on récupère la solution contenant de l'uranium (VI).

15. Procédé de décontamination d'un effluent aqueux radioactif, la contamination étant formée de cations radioactifs, dans lequel on précipite dans l'effluent un produit à base de phosphate de thorium par addition de thorium puis d'acide phosphorique à l'effluent en quantités telles que le rapport molaire P/Th, soit de 1,4 à 2, puis on chauffe dans un récipient fermé à une température de 50 à 250°C, pour précipiter un produit contenant du phosphate de thorium et les cations radioactifs contaminants.

**Claims**

1. Process for the preparation of a product containing a phosphate of at least one element M (IV) chosen from thorium (IV) and actinides (IV), **characterized in that** it comprises the following steps :

a) mixing a solution containing thorium (IV) and/or at least one actinide (IV) with a solution of phosphoric acid in amounts such that the molar ratio

$$\frac{PO_4}{M(IV)}$$

where M(IV) represents the total concentration of thorium (IV) and/or actinide(s) (IV), is from 1.4 to 2,
b) heating the mixture of solutions in a closed container at a temperature of 50 to 250°C in order to precipitate a product containing a phosphate of at least one element M chosen from thorium (IV) and actinides (IV) having a P/M molar ratio of 1.5,
c) separate the precipitated product from the solution.

2. Process according to claim 1, which additionally comprises the following steps :

d) washing with water the precipitated product thus separated, and
e) drying the washed product.

3. Process according to claim 1 or 2, where the product prepared is thorium phosphate-diphosphate of formula $Th_4(PO_4)_4P_2O_7$,
in which in step (a) a solution containing thorium and phosphoric acid is mixed, and in which the product obtained in step (c) or (e) is subjected to a heat treatment carried out at least partially at a temperature of 700 to 1300°C.

4. Process according to claim 1 or 2, where the product prepared is uranium phosphate,
in which in step (a) a solution containing uranium and phosphoric acid is mixed, and in which the product obtained in step (c) or (e) is subjected to a heat treatment carried out at least partially at a temperature of 700 à 1300°C so as to obtain uranium phosphate.

5. Process according to claim 1 or 2, where the product prepared is a solid solution of thorium phosphate and at least one tetravalent actinide,
in which in step (a) a solution containing thorium and at least one actinide and phosphoric acid is mixed, and in which the product obtained in step (c) or (e) is subjected to a heat treatment carried out at least partially at a temperature of 700 à 1300°C.

6. Process according to claim 5, in which the solid solution of phosphates corresponds to formula :

$$Th_{4-x}M_x(PO_4)_4P_2O_7$$

in which M is an element chosen from Pa(IV), U (IV), Np (IV) and Pu (IV), and x satisfies the following conditions :

$$x \leq 3.75$$

for Pa (IV)

$$x \leq 3$$

for U (IV)

$$x \leq 2.14$$

for Np (IV)

$$x \le 1.67$$

for Pu (IV).

7.  Process according to anyone of claims 1, 3, 5 and 6, in which the solution of thorium is a solution of ThCl$_4$ in hyrdochloric acid.

8.  Process according to anyone of claims 1, 2 and 4 to 6, in which the actinide is uranium (IV) and the solution of uranium (IV) is a solution of UCl$_4$ in hyrdochloric acid.

9.  Process according to anyone of claims 1, 2, 5 and 6, in which the actinide is neptunium (IV) and the solution of neptunium (IV) is a solution of neptunium in nitric acid.

10. Process according to anyone of claims 1, 2, 5 and 6, in which the actinide is plutonium (IV) et the solution of plutonium (IV) is a solution of plutonium in nitric acid.

11. Process according to anyone of claims 3 to 5, in which the heat treatment is carried out in to steps which are respectively :

    - a first step carried out at a temperature of 300 to 500°C for 1 to 5 hours, and
    - a second step carried out at a temperature of 1100 to 1300°C for 3 to 15 hours.

12. Process according to anyone of claims 1 to 11, in which in step (a), at least one element chosen from trivalent actinides and trivalent lanthanides is additionally added to the mixture in order to include trivalent actinide(s) and/or trivalent lanthanide(s) in the product precipitated in step (b).

13. Process according to claim 1, in which the product prepared is a composite material including at least one actinide (III) and/or at least one lanthanide (III),
    in which in step (a) a solution containing thorium and/or at least one actinide, and phosphoric acid is mixed,
    in which a powder of at least one actinide (III) and/or at least one lanthanide (III) in the phoshate form is dispersed in the product obtained in step (c) or (e), and the combination is subjected to a heat treatment, optionally preceded by a compacting, carried out at least partially at a temperature of 700 to 1300°C.

14. Process for the separation of uranium (VI), in the form of uranyl ion UO$_2^{2+}$, present in a solution with other cations including thorium, **characterized in that** phosphoric acid is added to the solution in an amount such that the molar ratio

$$\frac{\text{phosphoric acid}}{M(IV)}$$

is from 1,4 to 2, **in that** the solution thus obtained is heated at a temperature of 50 to 250°C in a closed container in order to precipitate a product containing the other cations including thorium, other than uranium, and **in that** the solution containing l'uranium (VI) is recovered.

15. Process for the decontamination of a radioactive aqueous effluent, the contamination being formed of radioactive cations,
    in which a product based on thorium phosphate is precipitated from the effluent by addition of thorium then phosphoric acid to the effluent in amounts such that the molar ratio P/Th is from 1,4 to 2, then heated in a closed container at a temperature of 50 to 250°C, in order to precipitate a product containing thorium phosphate and the contaminating radioactive cations.

**Patentansprüche**

1. Zubereitungsverfahren eines Produkts, das ein Phosphat aus wenigstens einem Element M (VI) enthält, das aus Thorium (VI) und Aktiniden (VI) ausgewählt ist, **dadurch gekennzeichnet, dass** es die folgenden Stufen umfasst:

   a) Mischen einer Lösung, die Thorium (IV) und / oder wenigstens ein Aktinid (IV) mit einer Phosphorsäurelösung in derartigen Mengen enthält, dass das Molverhältnis

$$\frac{PO4}{M(IV)}$$

   bei dem M(IV) die Gesamtkonzentration an Thorium (IV) und / oder Aktinide(n) (IV) darstellt, 1,4 bis 2 beträgt,
   b) Erhitzen der Mischung der Lösungen in einem geschlossenen Behälter bei einer Temperatur von 50 bis 250°C zur Fällung eines Produkts, das ein Phosphat aus mindestens einem Element M enthält, das aus Thorium (IV) und Aktiniden (IV) ausgewählt ist, die ein Molverhältnis von P/M gleich 1,5 haben,
   c) Trennung des gefällten Produkts der Lösung.

2. Verfahren gemäß Anspruch 1, das die folgenden Stufen umfasst:

   d) Waschen des auf diese Weise getrennten gefällten Produkts mit Wasser
   e) Trocknen des gewaschenen Produkts.

3. Verfahren gemäß Anspruch 1 oder 2, wobei das gefällte Produkt Thoriumphosphat-Disphosphat mit der Formel $Th_4(PO_4)_4P_2O_7$ ist,
   in dem in der Stufe (a) eine Lösung gemischt wird, die Thorium und Phosphorsäure enthält und in der das in der Stufe (c) oder (e) erhaltene Produkt einer Wärmebehandlung unterzogen wird, die wenigstens zum Teil bei einer Temperatur von 700 bis 1300°C durchgeführt wird.

4. Verfahren gemäß Anspruch 1 oder 2, in dem das zubereitete Produkt Uranphosphat ist,
   in dem in der Stufe (a) eine Lösung gemischt wird, die Uran und Phosphorsäure enthält und in dem das in der Stufe (c) oder (e) erhaltene Produkt einer Wärmebehandlung unterzogen wird, die wenigstens zum Teil bei einer Temperatur von 700°C bis 1300°C derart durchgeführt wird, dass Uranphosphor erhalten wird.

5. Verfahren gemäß Anspruch 1 oder 2, in dem das zubereitete Produkt eine feste Lösung aus Thoriumphosphat und wenigstens einem vierwertigen Aktinid ist,
   in dem in der Stufe (a) eine Lösung, die Thorium und wenigstens ein Aktinid enthält, und Phosphorsäure gemischt wird und in dem das in der Stufe (c) oder (e) erhaltene Produkt einer Wärmebehandlung unterzogen wird, die wenigstens zum Teil bei einer Temperatur von 700 bis 1300°C durchgeführt wird.

6. Verfahren gemäß Anspruch 5, in dem die feste Lösung aus Phosphat der folgenden Formel entspricht:

   $Th_{4-x}M_x(PO_4)_4P_2O_7$,

   in der M ein Element ist, das aus Pa(IV), U (IV), Np (IV) und Pu (IV) ausgewählt ist und x den folgenden Bedingungen genügt:

$$x \leq 3,75$$

   für Pa(IV)

$$x \leq 3$$

für U (IV)

$$x \leq 2,14$$

für Np (IV)

$$x \leq 1,67$$

für Pu (IV).

7. Verfahren gemäß Anspruch 1, 3, 5 und 6, in dem die Thoriumlösung eine Lösung aus ThCl4 in Salzsäure ist.

8. Verfahren gemäß Anspruch 1, 2 und 4 bis 6, in dem das Aktinid das Uran (IV) ist und die Uranlösung (IV) eine Lösung aus $UCl_4$ in Salzsäure ist.

9. Verfahren gemäß Anspruch 1, 2, 5 und 6, in dem das Aktinid das Neptunium (IV) ist und die Neptuniumlösung (IV) eine Neptuniumlösung in der Salpetersäure ist.

10. Verfahren gemäß Anspruch 1, 2, 5 und 6, in dem das Aktinid das Plutonium (IV) ist und die Plutoniumlösung (IV) eine Plutoniumlösung in der Salpetersäure ist.

11. Verfahren gemäß Anspruch 3 bis 5, in dem die Wärmebehandlung in zwei Stufen realisiert wird, die jeweils folgende Stufen sind:

   - eine erste Stufe, die 1 Std. bis 5 Std. lang bei einer Temperatur von 300 bis 500°C durchgeführt wird, und
   - eine zweite Stufe, die 3 bis 15 Std. lang bei einer Temperatur von 1100 bis 1300°C durchgeführt wird.

12. Verfahren gemäß Anspruch 1 bis 11, in dem in der Stufe (a) darüber hinaus zu der Mischung wenigstens ein Element hinzugefügt wird, das aus den dreiwertigen Aktiniden und den dreiwertigen Lanthiniden ausgewählt ist, um die dreiwertigen Aktinide und / oder die dreiwertigen Lanthanide in dem gefällten Produkt in der Stufe (b) einzuschließen.

13. Verfahren gemäß Anspruch 1, in dem das zubereitete Produkt ein Verbundmaterial ist, das wenigstens ein Aktinid (I-II) und / oder wenigstens ein Lanthanid (III) einschließt,
   in dem in der Stufe (a) eine Lösung, die Thorium und / oder wenigstens ein Aktinid enthält, und Phosphorsäure gemischt werden,
   in dem in dem in der Stufe (c) oder (e) erhaltenen Produkt ein Pulver aus wenigstens einem Aktinid (III) und / oder wenigstens einem Lanthanid (III) in Form von Phosphor verteilt wird, und das Ganze einer Wärmebehandlung unterzogen wird, der eventuell eine Komprimierung vorausgeht, die wenigstens zum Teil bei einer Temperatur von 700 bis 1300°C durchgeführt wird.

14. Trennverfahren für Uran (VI) in Form von Uranylionen $UO_2^{2+}$, das in einer Lösung mit anderen Kationen, unter Einschluss von Thorium, vorhanden ist, **dadurch gekennzeichnet, dass** zu der Lösung Phosphorsäure in einer derartigen Menge hinzugefügt wird, dass das Molverhältnis
   Phosphorsäure M(IV)
   1,4 bis 2 beträgt, dass die auf diese Weise erhaltene Lösung in einem geschlossenen Behälter auf eine Temperatur von 50 bis 250°C erhitzt wird, um ein Produkt zu fällen, das die anderen Kationen enthält, unter Einschluss des Thoriums, sowie[1] das Uran, und dass die das Uran (IV) enthaltene Lösung aufgefangen wird.

15. Dekontaminationsverfahren in einem radioaktiven wasserhaltigen Zufluss, wobei die Kontamination aus radioaktiven Kationen gebildet wird,
   in dem in dem Zufluss ein Produkt auf Thoriumphosphatbasis per Hinzufügen von Thorium, dann von Phosphorsäure zu dem Zufluss in derartigen Mengen gefällt wird, dass das Molverhältnis P/Th 1,4 bis 2 beträgt, dann in einem geschlossenen Behälter auf eine Temperatur von 50 bis 250°C erhitzt wird, um ein Produkt zu fällen, das Thoriumphosphat und die kontaminierenden radioaktiven Kationen enthält.

INTENSITE (u.a)

FIG. 1

TRANSMITTANCE (u.a)

$\sigma\,(cm^{-1})$

FIG. 2

FIG. 3

FIG. 4

**EP 1 474 359 B1**

## RÉFÉRENCES CITÉES DANS LA DESCRIPTION

**Documents brevets cités dans la description**

- WO 9630300 A